# EUROPEAN PATENT SPECIFICATION

(11) **EP 1 118 798 B1**
(45) Date of publication and mention of the grant of the patent: **07.01.2009**
(21) Application number: 01100074.2
(22) Date of filing: 10.01.2001
(51) Int. Cl.: F16H 3/66

(54) **Automatic transmission for vehicles**
Automatisches Getriebe für Fahrzeuge
Transmission automatique pour véhicules

(30) Priority: 11.01.2000 JP 2000002760; 19.10.2000 JP 2000319906
(43) Date of publication of application: 25.07.2001
(60) Divisional application: 08019511.8
(73) Proprietor: AISIN AW CO., LTD., Anjo-shi, Aichi-ken 444-1192 (JP); TOYOTA JIDOSHA KABUSHIKI KAISHA, Aichi-ken, 471-0826 (JP)
(72) Inventor: Sugiura, Nobutada, Anjo-shi, Aichi-ken 444-1192 (JP); Ishii, Takuya, Anjo-shi, Aichi-ken 444-1192 (JP); Toudo, Minoru, Anjo-shi, Aichi-ken 444-1192 (JP); Ozaki, Kazuhisa, Anjo-shi, Aichi-ken 444-1192 (JP); Hayakawa, Youichi, Anjo-shi, Aichi-ken 444-1192 (JP); Ito, Hiroshi, Toyota-shi, Aichi-ken 471-0826 (JP); Kanada, Toshiki, Toyota-shi, Aichi-ken 471-0826 (JP); Hojo, Yasuo, Toyota-shi, Aichi-ken 471-0826 (JP); Kashihara, Yuji, Toyota-shi, Aichi-ken 471-0826 (JP)
(74) Representative: Vossius & Partner

(56) References cited:
- GB-A- 1 308 004
- PATENT ABSTRACTS OF JAPAN vol. 014, no. 364 (M-1007), 7 August 1990 (1990-08-07) & JP 02 129446 A (TOYOTA MOTOR CORP), 17 May 1990 (1990-05-17)
- PATENT ABSTRACTS OF JAPAN vol. 1999, no. 05, 31 May 1999 (1999-05-31) & JP 11 051127 A (JATCO CORP), 23 February 1999 (1999-02-23)

## Description

### BACKGROUND OF THE INVENTION

The invention relates to an automatic transmission for a vehicle, and more particularly, to an automatic transmission for a vehicle of a type including a planetary gear set having at least four shift elements, and one planetary gear unit in which rotation is transmitted and input from the planetary gear unit to the planetary gear set, and is transmitted to the shift elements of the planetary gear set without passing through the planetary gear unit.

As an automatic transmission of this kind, there is a known transmission disclosed in JP-A- 2-129446 (see, e.g., Fig. 25). The disclosed automatic transmission is characterized by achieving 5 speeds (or 6 speeds) with less shift elements, resulting in compact automatic transmission.

Usually, the automatic transmission of this kind employs a one-way clutch (simply "OWC", hereinafter) in many cases for permitting rotation only in one direction to facilitate the shift control. For example, in the automatic transmission disclosed in

JP-A- 2-129446, a set of a coast OWC and a clutch is disposed in parallel to a third speed clutch K4 between a planetary gear unit and a planetary gear set.

In JP-A- 4-29650, third and fifth speed clutch C3 is likewise provided between a planetary gear unit and a planetary gear set.

Generally as the transmitting side and the receiving side of a clutch are formed as rotors, the number of rotor members is increased, thus causing inconvenience owing to enlarged clutch size.

Further, the clutch K4 or C3 disposed between the planetary gear unit and the planetary gear set also serves to prevent relative rotation between the shift elements of an upstream planetary gear unit from increasing in a state where the clutch deals with no shift operation due to rotation of the planetary gear set. That is, rotation of an input shaft is directly input to the planetary gear set without passing through the planetary gear unit. However, in such a structure, when the rotation of the input shaft is input to the planetary gear unit and the shift operation is conducted, the clutch K4 or C3 accordingly transmits the rotation that has been reduced by the planetary gear set with the increased torque to the planetary gear set. There is inconvenience that the capacity of the clutch K4 or C3 has to be increased in accordance with the torque to be transmitted, thus enlarging the clutch size.

GB-A-1 308 004 relates to speed change gear train arrangements for transmitting rotary drive from a rotary drive source to a driven member comprising a first planetary gear set, a second planetary gear set, and a third planetary gear set. Said second planetary gear set comprises firstly an outer ring gear and secondly a planetary pinion which meshes both with the ring gear of said second planetary gear set and with a portion of the planetary pinion of said first planetary gear set. The planetary pinion of said second planetary gear set is rotatably carried by the planet carrier of said first planetary gear set. The sun gears of said first and third planetary gear sets are connected constantly to each other. The ring gear of said third planetary gear set is connected constantly to the pinion carrier of said first planetary gear set and to said output shaft.

JP-A-11051127 relates to a device which provides transmission speeds of five advance speeds with planetary gears of single pinion type, connection members, clutches, brakes, and one-way clutches. An input shaft is integrally connected with a first ring gear of the first planetary gear. An output shaft is connected with a third carrier of the third planetary gear. Each gear change element is connected with a gear shift hydraulic controller.

In view of the aforementioned circumstances, it is a first object of the invention to provide an automatic transmission for a vehicle of a type including one planetary gear unit, in which rotation input to the planetary gear set is transmitted from the planetary gear unit, and is transmitted to the shift elements of the planetary gear set without passing through the planetary gear unit. The automatic transmission according to the invention can be formed into a compact structure by reducing the number of clutches as least as possible as well as reduce the size of the clutch itself.

It is a second object of the invention to provide an automatic transmission for a vehicle of the aforementioned type having a simple and compact structure, which prevents increase in the relative rotation speed between shift elements of a planetary gear unit that deals with no shift operation.

The object(s) of the present invention is/are achieved by the features of the claims.

According to a first aspect of the invention, there is provided an automatic transmission for a vehicle including an input shaft and an output shaft, a first planetary gear unit, and a planetary gear set having at least four shift elements, in which the planetary gear unit and the planetary gear set achieve multistage shift. The first planetary gear unit includes a first shift element to which rotation of the input shaft is input through a first clutch, a second shift element stopped from rotating by first engaging member, and a third shift element for outputting, to a fourth shift element of the planetary gear set, rotation that is reduced relative to the rotation speed of the input shaft.

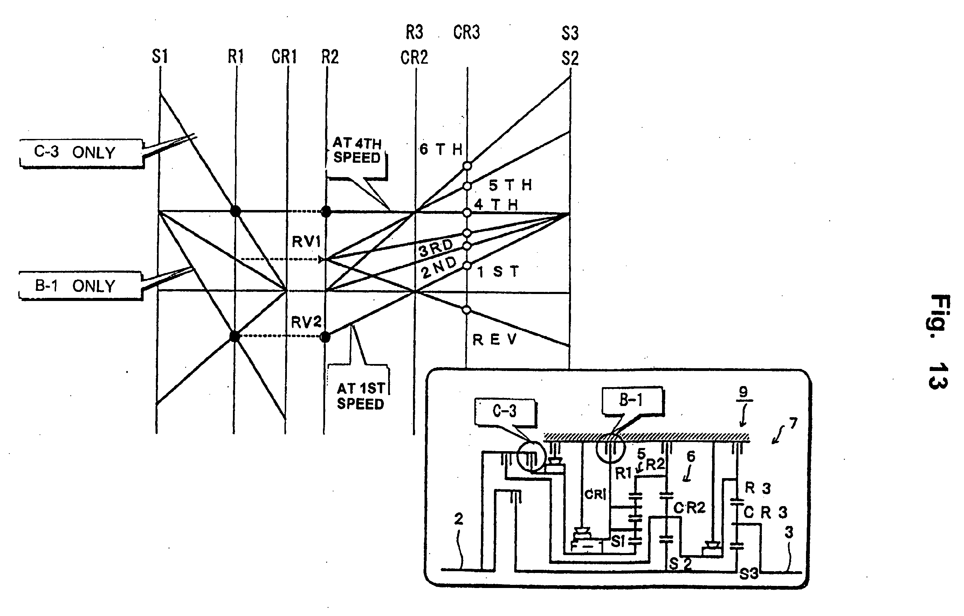

With the first aspect of the invention, it is possible to provide a gear train having a suitable structure for the automatic transmission. In the gear train, the first clutch is connected/disconnected so as to connect/disconnect the input shaft to/from the first shift element without providing a clutch between shift elements of the planetary gear unit and the planetary gear set, and the second shift element is appropriately stopped/unstopped by using the first engaging means so as to prevent excessive increase in the relative rotation between shift elements of the first planetary gear unit that deals with no shift operation as shown in Fig. 13.

Further, since the first clutch is disposed between the input shaft and the first shift element to which the rotation of the input shaft is transmitted, it is possible to reduce the capacity of the first clutch to be smaller than that of the clutch disposed between the shift elements of the planetary gear unit and the planetary gear set to which reduced rotation (thus, greater torque) compared with the rotation of the input shaft is transmitted. The resultant clutch structure, thus, can be formed into compact. Therefore, the automatic transmission itself can be formed into compact.

According to a preferred form of the first aspect of the invention, the first engaging member includes a first brake and a first one-way clutch for permitting rotation only in one direction, and the second shift element is connected to a case and stopped from rotating when the first brake or the first one-way clutch is engaged.

With the preferred form of the first aspect of the invention, the second shift element is connected to the case through the first brake or the first one-way clutch and stopped from rotating. The first brake is capable of applying the engine brake (coast). Therefore, unlike the conventional technique, a set of the clutch and the one-way clutch does not have to be disposed between rotating bodies such as the first planetary gear unit and the planetary gear set for coast, thus eliminating a complicated structure. The automatic transmission, thus, can be formed into a compact structure.

Further, the first brake is an indispensable part for preventing the first shift element from rotating at high speeds during idling of the first planetary gear unit. Therefore, the first brake can serve as the brake that prevents high-speed rotation and as the brake for engine brake. This makes it possible to reduce the number of friction engaging elements correspondingly. Therefore, the shift control can be easily performed and the automatic transmission can be made into compact structure.

According to a preferred form of the first aspect of the invention, the first shift element is connected to a case through a second one-way clutch and a second brake, and the second one-way clutch is locked by engaging the second brake so as to stop rotation of a fourth shift element.

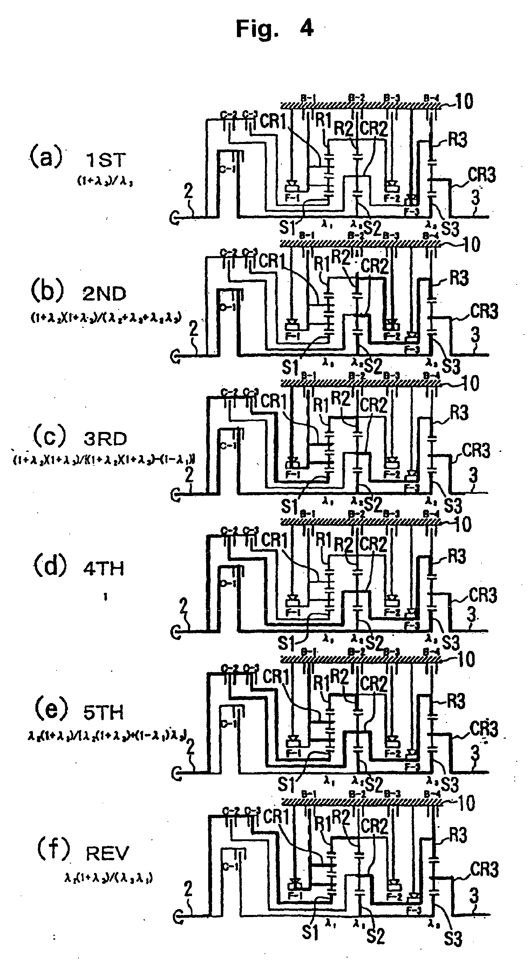

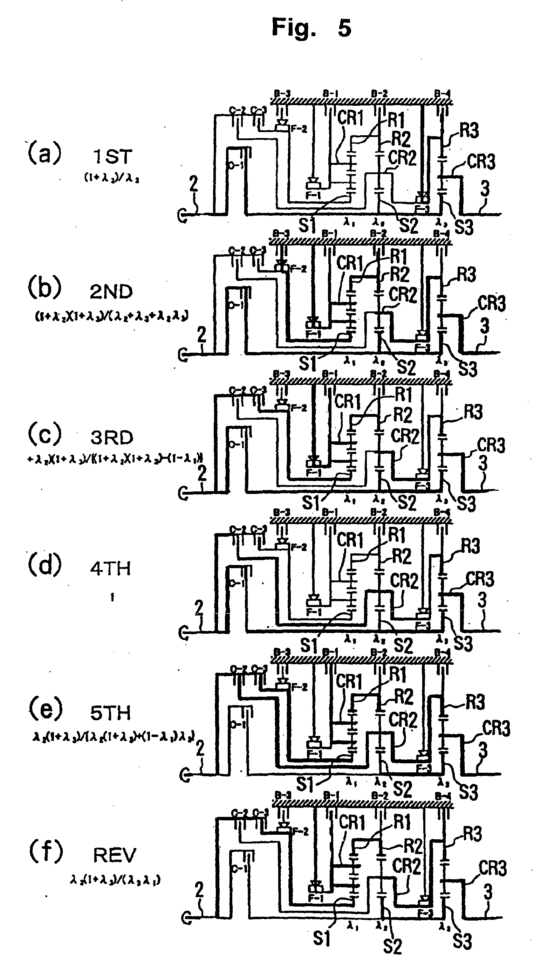

In the preferred form of the first aspect of the invention, the fourth shift element is stopped from rotating with the reaction force borne by the first and second one-way clutches and the second brake (see Fig. 5(b)). Therefore, torque loads of the second one-way clutch and the second brake can be reduced compared with the case where the fourth shift element is directly provided with the second one-way clutch and the second brake (see Fig. 4(b)), thus forming the automatic transmission into a compact structure.

According to a preferred form of the first aspect of the invention, the first shift element is connected to the case through a third brake, and the fourth shift element is stopped from rotating by engaging the first brake and the third brake.

In the preferred form of the first aspect of the invention, the fourth shift element is stopped from rotating with the torque borne by the first brake and the third brake. Therefore, the torque load of the third brake can be reduced compared with the case where the fourth shift element is directly provided with the third brake, thus forming the automatic transmission into a compact structure.

According to a preferred form of the first aspect of the invention, the planetary gear set includes four shift elements, the fourth shift element is connected to the third shift element of the first planetary gear unit, and is provided so as to be stopped from rotating by second engaging member, a fifth shift element is detachably connected to the input shaft by a second clutch, and is provided so as to be stopped from rotating by third engaging member, a sixth shift element is connected to the output shaft, and a seventh shift element is detachably connected to the input shaft by a third clutch.

In the preferred form of the first aspect of the invention, an automatic transmission of five or six forward speeds can be made into a compact structure by providing the fourth to seventh shift elements.

According to a second aspect, there is provided an automatic transmission for a vehicle including an input shaft and an output shaft, a first planetary gear unit capable of stopping one shift element by first engaging member, a planetary gear set having at least four shift elements, and a first clutch for transmitting rotation of the input shaft to one of the shift elements of the planetary gear set through the first planetary gear unit, in which one of a plurality of the shift elements is appropriately selected, and rotation of the input shaft is transmitted to the output shaft through the selected shift element so as to achieve multistage shift. The first planetary gear unit includes a first shift element to which rotation of the input shaft is input, a second shift element stopped from rotating by the first engaging member, and a third shift element for outputting rotation of the rotation speed different from that generated by the input shaft to the fourth shift element of the planetary gear set. The first engaging member includes a first brake and a first one-way clutch for permitting rotation only in one direction. The second shift element is stopped from rotating when the first brake or the first one-way clutch is engaged.

In the second aspect, the second shift element is stopped from rotating through the first brake and the first one-way clutch disposed between the second shift element and the case. Therefore, the first brake is capable of applying engine. Unlike the conventional technique, a set of the clutch and the one-way clutch does not have to be disposed between rotating bodies such as the first planetary gear unit and the planetary gear set for coast. Accordingly, a complicated supporting structure for disposing those mechanisms can be eliminated, thus further forming the automatic transmission into a compact structure.

Further, the first brake is indispensable part for preventing the first shift element from rotating at high speeds during idling of the first planetary gear unit. Therefore, the first brake can serve as the brake that prevents high-speed rotation and as the brake for engine brake. This makes it possible to reduce the number of friction engaging elements correspondingly. Therefore, the shift control can be easily performed and the automatic transmission can be made into compact structure.

According to a preferred form of the second aspect, the first clutch is disposed between the first shift element and the input shaft, the first shift element is connected to the second one-way clutch through a second brake, and the second one-way clutch is locked by engaging the second brake so as to stop the rotation of the fourth shift element.

In the preferred form of the second aspect, the fourth shift element is stopped from rotating with the reaction force borne by the first and second one-way clutches and the second brake (see Fig. 5(b)). Therefore, the torque load of the second one-way clutch and the second brake can be reduced compared with the case where the fourth shift element is directly provided with the second one-way clutch and the second brake (see Fig. 4(b)), thus forming the automatic transmission into a compact structure.

According to a preferred form of the second aspect, the first clutch is disposed between the first shift element and the input shaft, the first shift element is connected to a case through a third brake, and the fourth shift element is stopped from rotating by engaging the first brake and the third brake.

In the preferred form of the second aspect, the fourth shift element is stopped from rotating with the torque borne by the first brake and the third brake. Therefore, the torque load of the third brake can be reduced compared with the case where the fourth shift element is directly provided with the third brake, thus forming the automatic transmission into a compact structure.

According to a preferred form of the second aspect, the first planetary gear unit outputs reduced rotation from the third shift element (R1) when the second shift element (CR1) is stopped from rotating by the first engaging member.

In the preferred form of the second aspect of the invention, reduced rotation can be input to the planetary gear set in addition to rotation of the dual system input shaft. Therefore, as the number of multi-gear stage increases, it is possible to variously set the velocity diagram on the side of the planetary gear set. This may realize enhanced flexibility of gear ratio and allow employment of excellent gear ratio.

According to a preferred form of the second aspect, the planetary gear set includes four shift elements, the fourth shift element is connected to the third shift element of the first planetary gear unit, and the rotation of the fourth shift element at least in one direction is stopped by the second engaging member, a fifth shift element is detachably connected to the input shaft by a second clutch, and the rotation of the fifth shift element at least in one direction is stopped by the third engaging member, a sixth shift element is connected to the output shaft, and a seventh shift element is detachably connected to the input shaft by a third clutch.

In the preferred form of the second aspect, an automatic transmission of five or six forward speeds can be formed into a compact structure by employing the fourth to the seventh shift elements.

According to a third aspect, there is provided an automatic transmission for a vehicle including an input shaft and an output shaft, a first planetary gear unit, and a planetary gear set having at least four shift elements, in which the planetary gear unit and the planetary gear set achieve multistage shift. The first planetary gear unit includes a first shift element to which rotation of the input shaft is input through a first clutch, a second shift element stopped from rotating by a first one-way clutch or a first brake, and a third shift element for outputting, to a fourth shift element of the planetary gear set, rotation that is reduced relative to the rotation speed of the input shaft. The second shift element is stopped from rotating when the first brake or the first one-way clutch is engaged.

In the third aspect, it is possible to provide a gear train having a suitable structure for the automatic transmission. In the gear train, the first clutch is connected/disconnected so as to connect/disconnect the input shaft to/from the first shift element without providing a clutch between shift elements of the planetary gear unit and the planetary gear set, and the second shift element is appropriately stopped/unstopped using the first one-way clutch and the first brake so as to prevent excessive increase in the relative rotation between shift elements of the first planetary gear unit that deals with no shift operation as shown in Fig. 13.

Further, since the first clutch is disposed between the input shaft and the first shift element to which the rotation of the input shaft is transmitted, it is possible to reduce the capacity of the first clutch to be smaller than that of the clutch disposed between the shift elements of the planetary gear unit and the planetary gear set to which reduced rotation (thus, greater torque) compared with the rotation of the input shaft is transmitted. The resultant clutch structure, thus, can be formed into compact structure.

According to a preferred form of the third aspect, the first clutch is disposed between the first shift element and the input shaft, the first shift element is connected to a case through the second one-way clutch and a second brake, and the second one-way clutch is locked by engaging the second brake so as to stop the rotation of the fourth shift element.

In the preferred form of the third aspect, the fourth shift element is stopped from rotating with the reaction force borne by the first and the second one-way clutches and the second brake (see Fig. 5(b)). Therefore, the torque load of the second one-way clutch and the second brake can be reduced compared with the case where the fourth shift element is directly provided with the second one-way clutch and the second brake (see Fig. 4(b)), thus forming the automatic transmission into a compact structure.

According to a preferred form of the third aspect, the first shift element is connected to a case through a third brake, and the fourth shift element is stopped from rotating by engaging the first brake and the third brake.

In the preferred form of the third aspect, the fourth shift element is stopped from rotating with the torque borne by the first brake and the third brake. Therefore, the torque load of the third brake can be reduced compared with the case where the fourth shift element is directly provided with the third brake, thus forming the automatic transmission into a compact structure.

According to a preferred form of the third aspect, the first planetary gear unit outputs reduced rotation from the third shift element when the second shift element is stopped from rotating by the first engaging member.

In the preferred form of the third aspect of the invention, reduced rotation can be input to the planetary gear set in addition to rotation of the dual system input shaft. Therefore, as the number of multi-gear stage increases, it is possible to variously set the velocity diagram on the side of the planetary gear set. This may result in enhanced flexibility of gear ratio and allow employment of excellent gear ratio.

According to a preferred form of the third aspect, the planetary gear set includes four shift elements, the fourth shift element is connected to the third shift element of the first planetary gear unit, and is provided such that the fourth shift element can be stopped from rotating by second engaging member, a fifth shift element is detachably connected to the input shaft by a second clutch, and can be stopped from rotating by third engaging member, a sixth shift element is connected to the output shaft, and a seventh shift element is detachably connected to the input shaft by a third clutch.

In the preferred form of the third aspect, an automatic transmission of five or six forward speeds can be formed into a compact structure by employing the fourth to the seventh shift elements.

Reference numerals in the brackets show corresponding elements in the drawings. The description of the specification is not limited by such numerals on the drawings.
Fig. 1 shows an embodiment of an automatic transmission for a vehicle to which the invention is applied, wherein Fig. 1(a) shows an operation Table, a gear ratio and a gear ratio step, and Fig. 1(b) is a skeleton diagram of the automatic transmission;
Fig. 2 shows diagrams for representing another embodiment of the automatic transmission for the vehicle to which the invention is applied, wherein Fig. 2(a) shows an operation Table, a gear ratio and a gear ratio step, and Fig. 2(b) is a skeleton diagram of the automatic transmission;
Fig. 3 shows diagrams for representing further embodiment of the automatic transmission for the vehicle to which the invention is applied, wherein Fig. 3(a) shows an operation Table, a gear ratio and a gear ratio step, and Fig. 3(b) is a skeleton diagram of the automatic transmission;
Fig. 4 shows diagrams of torque transmission at the respective speeds of the automatic transmission shown in Fig. 1;
Fig. 5 shows diagrams of torque transmission at the respective speeds of the automatic transmission shown in Fig. 2;
Fig. 6 is a velocity diagram of the automatic transmissions shown in Figs. 1 to 3;
Fig. 7 is a skeleton diagram showing one arrangement example of clutches of a front planetary gear unit and a brake;
Fig. 8 does not form part of the invention and is a skeleton diagram showing an illustrative arrangement example of the clutches of the front planetary gear unit and the brake;
Fig. 9 shows skeleton diagrams representing a further example of the front planetary gear unit;
Fig. 10 is a skeleton diagram showing another example of a planetary gear set;
Fig. 11 is a skeleton diagram showing further example of the planetary gear set;
Fig. 12 is a skeleton diagram showing still further example of the planetary gear set; and
Fig. 13 is a velocity diagram representing correlation between the clutch of the front planetary gear unit and the brake of the automatic transmission shown in Fig. 2.

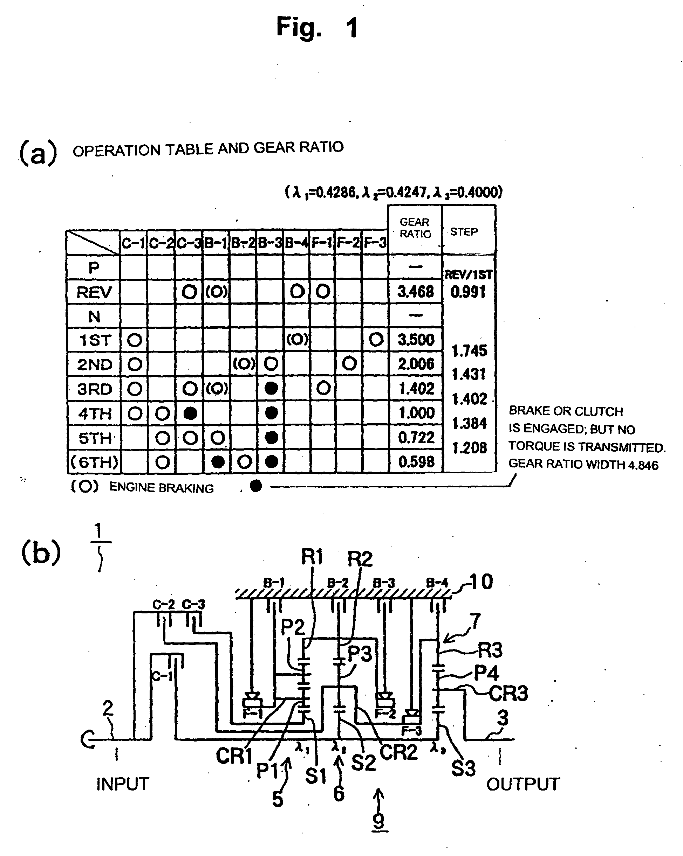

Fig. 1 shows an embodiment of an automatic transmission for a vehicle to which the invention is applied, wherein Fig. 1(a) shows an operation Table, a gear ratio and a gear ratio step, and Fig. 1(b) is a skeleton diagram.

An automatic transmission 1 for a vehicle includes an input shaft 2 connected to an engine output shaft through a torque converter, and an output shaft 3 connected to wheels or the like. A front planetary gear unit 5 including a dual planetary gear unit and a rear planetary gear set 9 including two simple planetary gear units, i.e., a middle planetary gear unit 6 and a rear planetary gear unit 7 are disposed between the input shaft 2 and the output shaft 3.

The front planetary gear unit 5 constituting a first planetary gear unit includes a sun gear S1 connected to the input shaft 2 through a clutch C-3. The sun gear S1 meshes with a pinion P1, which is meshed with a pinion P2 in mesh with a ring gear R1. The pinions P1, P2 are supported by a carrier CR1. The carrier CR1 is connected to a one-way clutch F-1 provided in a gear case 10 and a brake B-1, which constitute first engaging member.

The middle planetary gear unit 6 of the rear planetary gear set 9 closer to the front planetary gear unit 5 includes a sun gear S2 connected to the input shaft 2 through a clutch C-1. The sun gear S2 meshes with a pinion P3 in mesh with a ring gear R2. The pinion P3 is supported by a carrier CR2, to which the input shaft 2 is connected through a clutch C-2. The ring gear R1 of the front planetary gear unit 5 is connected to the ring gear R2. These ring gears R1 and R2 can be stopped from rotating through a brake B-2 constituting second engaging member. Similarly, the ring gears R1 and R2 can be stopped from rotating through a one-way clutch F-2 and a brake B-3 connected to the gear case 10 and constituting the second engaging member together with the brake B-2.

Further, the rear planetary gear unit 7 of the rear planetary gear set 9 closer to the output shaft 3 includes a sun gear S3 that is integrally connected to the input shaft 2 through the clutch C-1 such that the sun gear S3 can rotate in synchronization with the sun gear S2. The sun gear S3 meshes with a pinion P4 in mesh with a ring gear R3. The ring gear R3 is connected to the carrier CR2 of the middle planetary gear unit 6. The ring gear R3 can be stopped from rotating through a one-way clutch F-3 and a brake B-4 provided in the gear case 10 and constituting third engaging member. The pinion P4 is supported by a carrier CR3, and the output shaft 3 is connected to the carrier CR3.

Here, the rear planetary gear set 9 has four shift elements, i.e., a shift element including the sun gears S2, S3 connected to each other and to the input shaft 2, a shift element including the carrier CR2 of the middle planetary gear unit 6 and the ring gear R3 of the rear planetary gear unit 7, a shift element including the ring gear R2 connected to the ring gear R1 that is an output member of the front planetary gear unit 5, and a shift element including the carrier CR3 to which the output shaft 3 is connected.

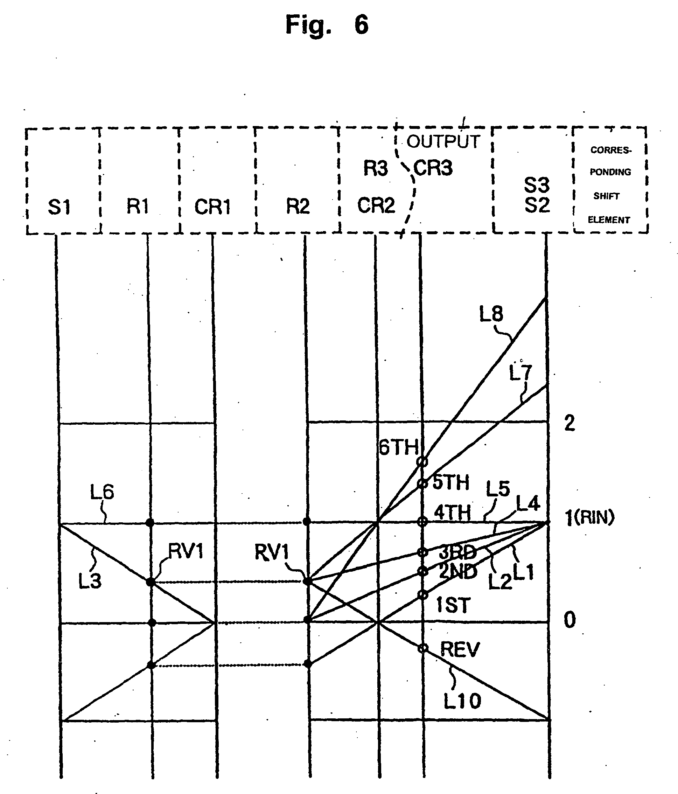

Next, operation of the automatic transmission 1 will be explained based on an operation Table shown in Fig. 1(a), a torque transmission diagram shown in Fig. 4 and a velocity diagram shown in Fig. 6. In the velocity diagram in Fig. 6, vertical lines at the right side corresponding to the shift elements of the rear planetary gear set 9 respectively represent the fourth, fifth, sixth and seventh shift elements from the left side.

At the first speed, as shown in Fig. 1(a), the clutch C-1 is engaged, the one-way clutch F-3 is actuated, the input shaft 2 is connected to the sun gears S2, S3, and reverse rotation of the ring gear R3 is prevented by the one-way clutch F-3. As shown in Figs. 4(a) and 6, rotation (RIN) of the input shaft 2 is directly input to the sun gear S3 of the rear planetary gear set 9 through the clutch C-1. Then, the ring gear R3 at the stationary state is brought into the state as shown by a line L1 in the velocity diagram of Fig. 6. The first forward speed 1ST is output from the carrier CR3 to which the output shaft 3 is connected. At that time, the middle planetary gear unit 6 is in an idling state due to rotation of the sun gear S2.

Assuming that the gear ratio of the rear planetary gear unit 7 is expressed as the equation λ₃=Z_{S3}/Z_{R3} where Z_{S3} is the number of teeth of the sun gear S3, and Z_{R3} is the number of teeth of the ring gear R3, the gear ratio at this time is obtained from the equation of (1+λ₃)/λ₃. If Z_{S3}=32 and Z_{R3}=80 are substituted, λ₃=0.4000, and the first speed gear ratio becomes 3.500 as shown in Fig. 1(a).

At the second speed, as shown in Fig. 1(a), the brake B-3 is engaged in addition to the engagement of the clutch C-1 at the first speed, and actuation of the one-way clutch F-3 is released, and the one-way clutch F-2 is actuated. In this state, the ring gear R2 of the middle planetary gear unit 6 that has been in the idling state is stopped from rotating by the brake B-3 and the one-way clutch F-2. In this state, as shown in Fig. 4(b), rotation of the input shaft 2 is input to the sun gear S2 of the middle planetary gear unit 6, and also input to the sun gear S3 of the rear planetary gear unit 7. However, as the ring gear R2 is in the stopping state, rotation thereof is prevented (speed = 0). The state shown by a line L2 in the velocity diagram in Fig. 6 is established, and rotation of the second forward speed 2ND is output from the carrier CR3 to which the output shaft 3 is connected.

Assuming that the gear ratio of the middle planetary gear unit 6 is obtained by the equation of λ₂=Z_{S2}/Z_{R2}, where Z_{S2} is the number of teeth of the sun gear S2, and Z_{R2} is the number of teeth of the ring gear R2, The gear ratio at that time can be expressed by the equation of (1+λ₂)(1+λ₃)/(λ₂+λ₃+λ₂λ₃). If Z_{S2}=31 and Z_{R2}=73 are substituted, λ₂=0.4247. The gear ratio of the second speed becomes 2.006 as shown in Fig. 1(a) considering the aforementioned value λ₃.

At the third speed, as shown in Fig. 1(a), the clutch C-3 is engaged in addition to the engagement of the clutch C-1 at the first and the second speeds, actuation of the one-way clutch F-2 is released, and the one-way clutch F-1 is actuated. In this state, rotation of the input shaft 2 is input to the rear planetary gear set 9 through the clutch C-1 and also to the sun gear S3 of the front planetary gear unit 5 through the clutch C-3. Reverse rotation of the carrier CR1 is prevented by the one-way clutch F-1 connected to the case 10, and the carrier CR1 is connected to the case 10 and stopped from rotating.

Then, rotation of the input shaft 2 is input to the sun gear S1 in the front planetary gear unit 5, and the carrier CR1 is stopped from rotating. Therefore, the state shown by a line L3 of the velocity diagram in Fig. 6 is established, and the reduced forward rotation RV1 is output from the ring gear R1 as the output member to the ring gear R2 of the middle planetary gear unit 6. As the rotation RIN of the input shaft 2 is input to the sun gears S2, S3 in the rear planetary gear set 9 as shown in Fig.4(c), the rotation RV1 input from the front planetary gear unit 5 to the ring gear R2 is synthesized as shown by a line L4 of the velocity diagram in Fig. 6. The third speed 3RD is, thus, output from the carrier CR3 to which the output shaft 3 is connected.

At that time, the brake B-3 is in the engaged state. As the one-way clutch F-2 is in the idling state, the brake B-3 deals with no shifting operation.

Assuming that the gear ratio of the front planetary gear unit 5 is obtained by the equation of λ₁=Z_{S1}/Z_{R1}, where Z_{S1} is the number of teeth of the sun gear S1, and Z_{R1} is the number of teeth of the ring gear R1, the gear ratio at that time is obtained by the equation of (1+λ₂)(1+λ₃)/{(1+λ₂)(1+λ₃)}-(1+λ₁). If Z_{S1}=39 and Z_{R2}=91 are substituted, the value of λ₂ becomes 0.4286. The gear ratio of the third speed becomes 1.402 as shown in Fig. 1(a) considering the aforementioned values λ₂ and λ₃.

At the fourth speed, as shown in Fig. 1(a), the clutch C-2 is engaged in addition to the engagement of the clutch C-1 at the first, second and third speeds, and actuation of the one-way clutch F-1 is released. In this state, rotation of the input shaft 2 is input to the sun gears S2, S3 of the rear planetary gear set 9 through the clutch C-1 and also to the carrier CR2/ring gear R3 of the rear planetary gear set 9 through the clutch C-2. Members constituting the rear planetary gear set 9 are rotated through direct connection, and the state shown by a line L5 in Fig. 6 is established. The fourth speed 4TH is, thus, output from the carrier CR3 to which the output shaft 3 is connected.

At this time, the clutch C-3 and the brake B-3 are engaged with each other as shown in Fig. 1(a). Rotation of the input shaft 2 is transmitted to the sun gear S1 in the front planetary gear unit 5, and the middle planetary gear unit 6 and the input shaft 2 are directly connected for forward rotation. Therefore, rotation of the input shaft 2 is also input to the ring gear R1 connected to the ring gear R2, the state shown by a line L6 in Fig. 6 is established, and the front planetary gear unit 5 idles in the direct connection state. As the rear planetary gear set 9 is rotated in the direct connected state, the gear ratio at the fourth speed becomes 1.

At the fifth speed, as shown in Fig. 1(a), the clutch C-1 is disengaged, and engaged state of the clutches C-2, c-3 is remained, and the brake B-1 is engaged. In this state, rotation of the input shaft 2 is input to the carrier CR2/ring gear R3 of the rear planetary gear set 9 through the clutch C-2, and is also input to the sun gear S1 of the front planetary gear unit 5 through the clutch C-3. Then, since the carrier CR1 is stopped from rotating by the brake B-1, the front planetary gear unit 5 is brought into the state shown by the line L3 in Fig. 6, and reduced forward rotation RV1 is output from the ring gear R1 to the ring gear R2 of the rear planetary gear set 9. As described above, rotation of the input shaft 2 is input to the carrier CR2/ring gear R3 of the rear planetary gear set 9 and thus, the velocity diagram is brought into the sate as shown by a line L7 in Fig. 6. The fifth rotation speed 5TH is output from the carrier CR3 to the output shaft 3.

At that time, the brake B-3 is engaged as shown in Fig. 1(a). However as the one-way clutch F-2 is in an idling state, the brake B-3 deals with no shifting operation.

The gear ratio at that time is obtained by the following equation of λ₂(1+λ₃)/{λ₂(1+λ₃)+(1-λ₃)}, and the gear ratio of the fifth speed becomes 0.722 as shown in Fig. 1(a) considering the aforementioned values λ₁, λ₂ and λ₃.

At the sixth speed, as shown in Fig. 1(a), the clutch C-3 is disengaged and the brake B-2 is engaged. In this state, rotation RIN of the input shaft 2 is input to the carrier CR2/ring gear R3 of the rear planetary gear set 9 through the clutch C-2, and the ring gear R2 is stopped from rotating by the brake B-2. Therefore, the rear planetary gear set 9 is brought into the state shown by a line L8 in Fig. 6. The rotation at the sixth speed 6TH is output from the carrier CR3 to the output shaft 3.

At that time, the brakes B-1, B-3 are in the engaged states as shown in Fig. 1(a). As the ring gear R1 is stopped from rotating by the brake B-2, the front planetary gear unit 5 is not rotated. The brakes B-1, B-3 deal with no shifting operation.

In the reverse gear stage, the clutch C-3 is engaged, and the brake B-4 and the one-way clutch F-1 are engaged as shown in Fig. 1(a). In this state, rotation RIN of the input shaft 2 is input to the sun gear S1 of the front planetary gear unit 5 through the clutch C-3, and the carrier CR1 is stopped from rotating by the one-way clutch F-1. Therefore, the velocity diagram is as shown by the line L3 in Fig. 6, and forward output rotation RV1 is output from the ring gear R1 to the ring gear R2 of the rear planetary gear set 9. Since the ring gear R3/carrier CR2 are stopped from rotating by the brake B-4, the rear planetary gear set 9 is brought into the state shown by a line L10 in Fig. 6. The reverse rotation REV is, thus, output from the carrier CR3 to the output shaft 3.

The gear ratio at that time is obtained by the equation of λ₂(1+λ₃)/λ₃λ₁. The reverse gear ratio becomes 3.468 as shown in Fig. 1(a) considering the aforementioned values λ₁, λ₂ and λ₃.

At the time of engine brake (coast), as shown in Fig. 1(a), at the third speed, the brake B-1 connected to the case 10 is engaged to connect the carrier CR1 to the case 10. Accordingly, the carrier CR1 is engaged by reliably preventing the rotation thereof. The third speed, then, can reliably be generated based on the velocity diagram shown in Fig. 6. The one-way clutch F-1 is disposed between the case 10, and, unlike the conventional technology, the set of the clutch and one-way clutch does not have to be disposed between two rotors such as the front planetary gear unit 5 and the planetary gear set 9 for coast. This makes it possible to eliminate a complicated supporting mechanism for disposing these mechanisms, and the automatic transmission can be formed into a compact structure correspondingly.

At the second speed, the brake B-2 is engaged, and the ring gear R2 is reliably connected to the case 10 and stopped from rotating. At the first speed, the brake B-4 is engaged so as to reliably stop the rotation of the ring gear R3.

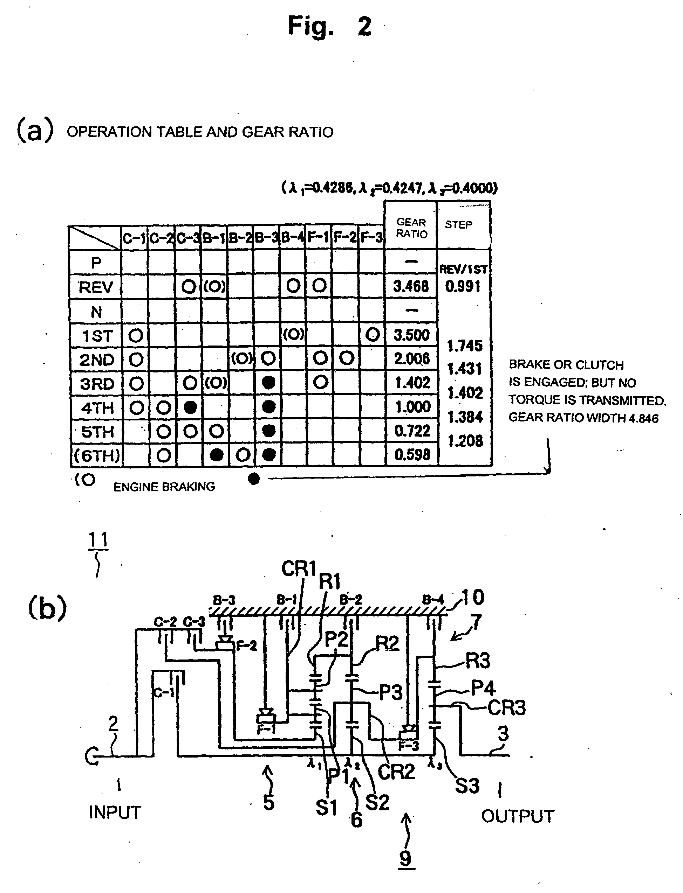

In the aforementioned embodiment, the brake B-3 and the one-way clutch F-2 as engaging member of the ring gear R2 of the rear planetary gear set 9 are provided directly on the ring gear R2. The brake B-3 and the one-way clutch F-2 may be disposed on any positions so long as the ring gear R2 can be stopped from rotating. As shown in Fig. 2, it is possible to dispose the brake B-3 and the one-way clutch F-2 between the clutch C-3 and the sun gear S1 of the front planetary gear unit 5 so as to stop the rotation of the ring gear R2 through the front planetary gear unit 5.

An automatic transmission shown in Fig. 2 as another embodiment of the invention will be explained. The structure and operation of this automatic transmission are the same as those shown in Fig. 1 except the arrangement of the brake B-3 and the one-way clutch F-2 (the velocity diagram is also the same as that shown in Fig. 6)). Therefore, the portions of the automatic transmission of the embodiment different from those of the automatic transmission 1 shown in Fig. 1 will be explained. Elements similar to those of the automatic transmission 1 shown in Fig. 1 will be designated with the same reference numerals, and explanation thereof will be omitted.

The automatic transmission 11 shown in Fig. 2(b) is structured such that a one-way clutch F-2 and a brake B-3 are disposed between a sun gear S1 and a clutch C-3 and between a case 10. A clutch C-1, the brake B-3, a one-way clutches F1, F2 are actuated as shown in Fig. 2(a) such that the second speed is output from an output shaft 3 in the automatic transmission 11. As shown in Fig. 2(a), in addition to engagement of the clutch C-1 at the first speed, the brake B-3 is engaged, actuation of the one-way clutch F-3 is released, and the one-way clutches F-1 and F-2 are actuated. In this state, as shown in Fig. 5(b), the ring gear R2 of a middle planetary gear unit 6 that has been in the idling state is stopped from rotating through the sun gear S1 stopped from rotating by the one-way clutch F-2 that has been brought into a locked state by actuating the brake B-3 and the carrier CR1 stopped from rotating by the locked one-way clutch F-1.

In this state, as shown in Fig. 5(b), rotation of the input shaft 2 is input to the middle planetary gear unit 6 from the sun gear S2, and input to a sun gear S3 of a rear planetary gear unit 7. However, since the ring gear R2 is in the stopping state, rotation thereof is prevented (speed = 0), and the state shown by a line L2 of the velocity diagram in Fig. 6 is established. The second forward speed 2ND is output from the carrier CR3 to which the output shaft 3 is connected.

The rotation torque of the ring gear R2 is borne in which rotation of the carrier CR1 is stopped from rotating by the one-way clutch F-1, and rotation of the sun gear S1 is stopped from rotating by the brake B-3 through the one-way-clutch F-2. In this way, the ring gear R2 is reliably stopped from rotating by the carrier CR1 and the sun gear S1 which have been kept stopped from rotating, and rotation torque thereof is borne by the respective shift elements. In this manner, torque-loading ability of each of the one-way clutch F-2 and the brake B-3 can be lowered by utilizing torque-loading ability of the one-way clutch F-1. It is possible to reduce the torque load as compared with the case where the one-way clutch F-2 and the brake B-3 are mounted directly to the ring gear R2, and the one-way clutch F-2 and the brake B-3 can be formed into compact structures.

The torque transmitting path and actuation process of friction engagement element such as clutch, brake and one-way clutch at the speed except the second speed are the same as those of the automatic transmission 1 shown in Fig. 1, and the gear ratio is also the same.

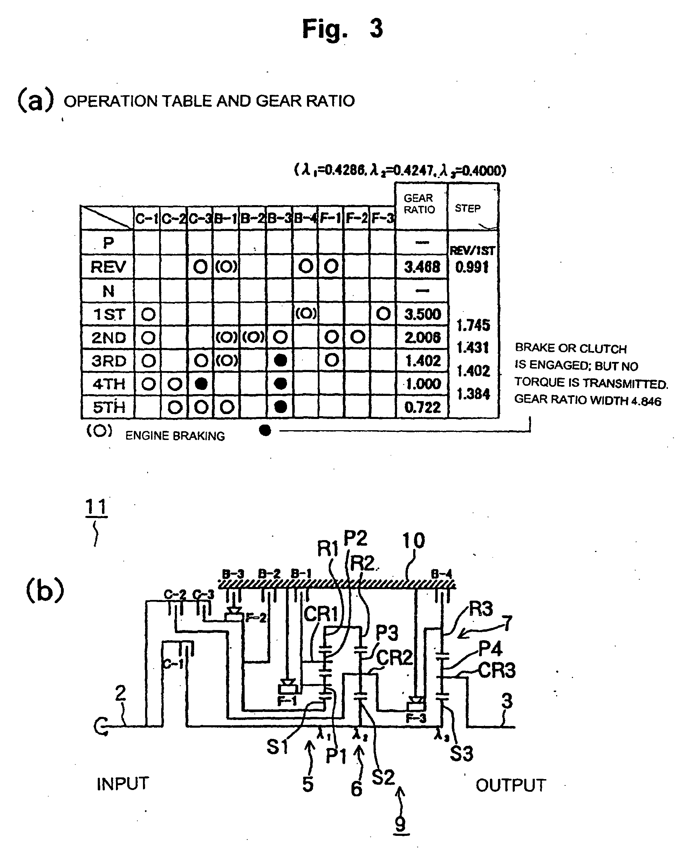

Further, as shown in Fig. 3(b), the brake B-2 for engine braking at the second speed is likewise disposed between the sun gear S1 of the front planetary gear unit 5 and the clutch C-3 between the gear case 10. During engine braking at the second speed, as shown in Fig. 3(a), the brake B-1 for the fifth speed is actuated in addition to the brake B-2 that is originally for engine braking, the ring gear R2 is stopped from rotating by the brakes B-1 and B-2 through the front planetary gear unit 5, thus making it possible to reduce the torque load of the brake B-2 to form the brake B-2 into a compact structure correspondingly. That is, rotation of the ring gear R2 is stopped by stopping the carrier CR1 by the brake B-1, stopping the sun gear S1 by the brake B-2, stopping rotation of both the shift elements, thereby stopping the entire front planetary gear unit 5. Since the torque can be borne by the two brakes B-1 and B-2, it is possible to reduce the capability of the brake B-2 and to form the brake B-2 into a compact structure as compared with the case where the brake B-2 is directly mounted to the ring gear R2.

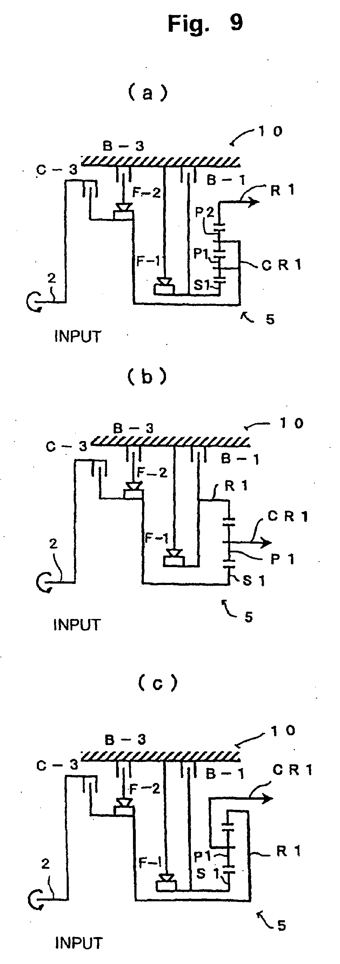

In this embodiment, the front planetary gear unit 5 is of a dual type in which two pinions P1, P2 are meshed in series between the sun gear S1 and the ring gear R1. However, the front planetary gear unit 5 may be of a simple type in which one pinion is disposed between the sun gear S1 and the ring gear R1 as shown in Figs. 9(b) and 9(c).

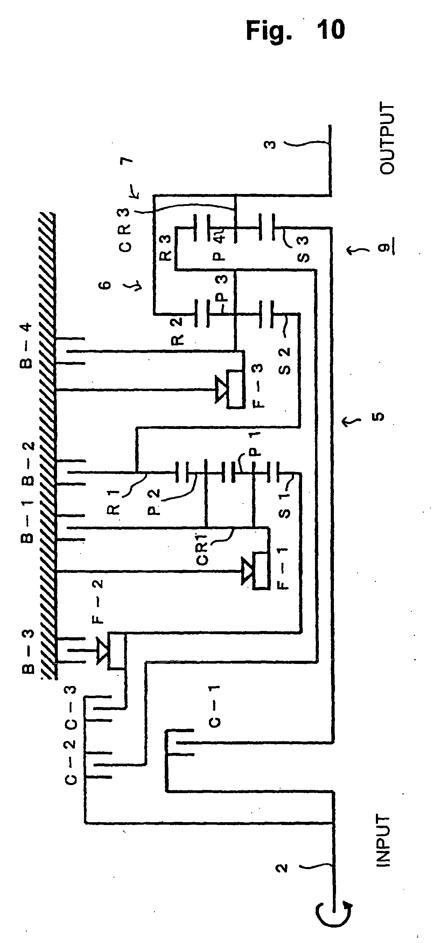

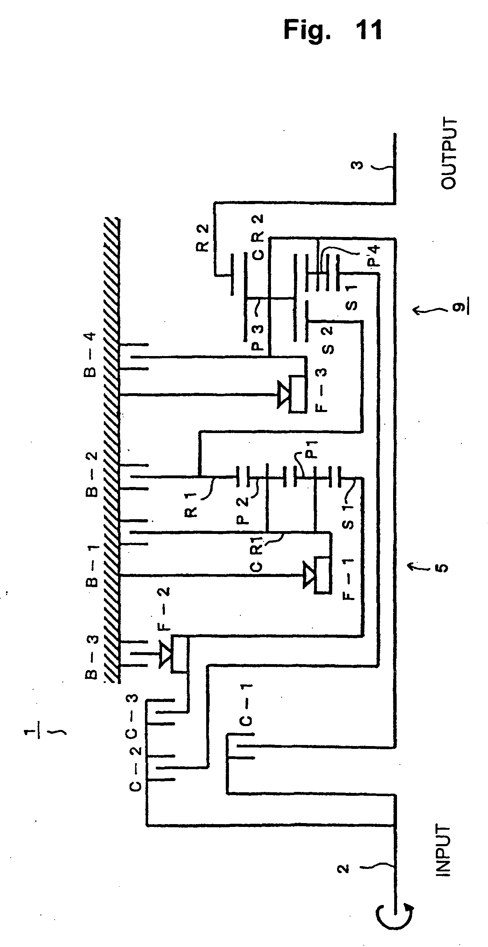

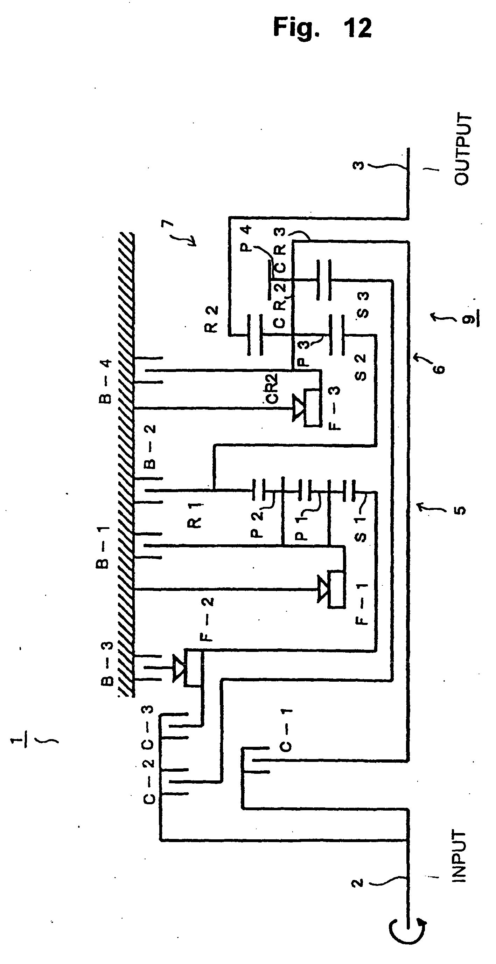

The rear planetary gear set 9 is not limited to the type described in the embodiment. It may be of Ravigneaux type as shown in Fig. 11, CR-CR type as shown in Fig. 10, or a stepped pinion type as shown in Fig. 12, so long as the rear planetary gear set 9 has at least four shift elements.

The roles of the brake B-1 disposed on the carrier CR1 of the front planetary gear unit 5 and the clutch C-3 disposed between the sun gear S1 and the input shaft 2 in the automatic transmission 11 shown in Fig. 2(b) will be explained in detail.

Referring to Fig. 13, in the case where a clutch is not disposed between the shift elements of the front planetary gear unit 5 and the middle planetary gear unit 6 constituting the rear planetary gear set 9, and only one of the brake B-1 or the clutch C-3 is disposed in the front planetary gear unit 5, the rotation RV1 to the rotation of the input shaft 2 at the reverse, the third and the sixth speed has to be output from the front planetary gear unit 5 to the rear planetary gear set 9 so as to output five (six) forward speeds and a reverse speed shown in Fig. 6 from the output shaft 3. The reverse rotation RV2 is input to the planetary gear unit 6 at the first speed. In order to arrange the brake B-1 or the clutch C-3 so as to satisfy such conditions, the input shaft 2 is directly connected to the sun gear S1 when only the brake B-1 exists, and the carrier CR1 is fixed to the case 10 when only the clutch C-3 exists.

In the case of an automatic transmission having such a structure, as being obvious from the velocity diagram in Fig. 13, at the first or fourth speed during which rotation of the input shaft dealing with the shifting operation is directly input to the rear planetary gear set 9 without passing through the front planetary gear unit 5, rotation of the ring gear R2 of the middle planetary gear unit 6 is input to the ring gear R1 of the front planetary gear unit 5 to allow the front planetary gear unit 5 to idle.

Assuming that the sun gear S1 is directly connected to the input shaft 2 without clutch C-3 and only the brake B-1 exists, the relative speed between the sun gear S1 that reversely rotates at high speeds and rotates forward at the input rotational speed, and the CR1 and the pinions P1, P2 supported thereby may become excessively great to exceed a practical region of the transmission.

Further, at the fourth speed, in the case where no brake B-1 exists, the carrier CR1 is fixed to the case 10, and only the clutch C-3 is provided, the clutch C-3 is disengaged by rotation of the ring gear R1. The sun gear S1 that is brought into free rotating state idles at a high speed, and relative speed between the sun gear S1 and the carrier CR1 in a stationary state becomes extremely great, and likewise the relative speed adversely exceeds a practical region of the transmission.

To prevent such a situation, in this invention, the clutch C-3 is disposed between two shift elements of the front planetary gear unit 5, i.e., the sun gear S1 and the input shaft 2, and the brake B-1 is disposed on the carrier CR1 such that the relative rotation between the shift elements of the front planetary gear unit 5 does not become excessively great as shown in the velocity diagram of Fig. 6.

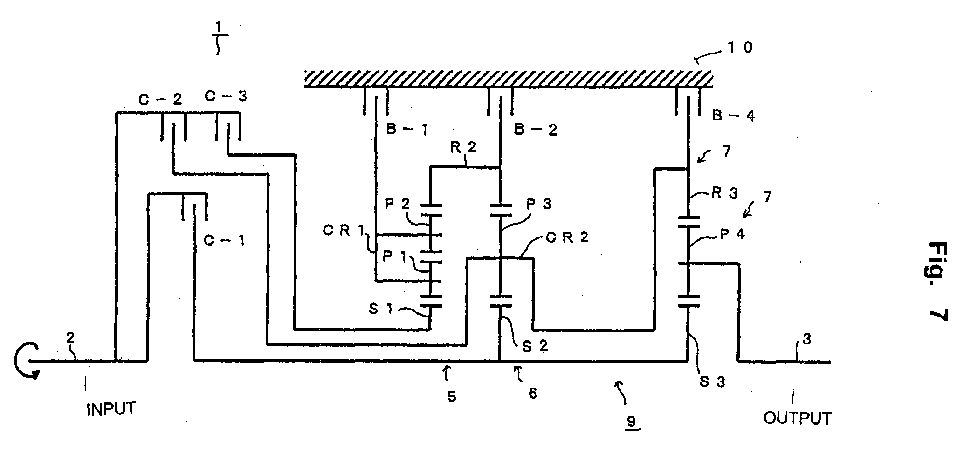

Fig. 7 shows an example of a skeleton diagram of this invention mainly emphasizing on the arrangement of the brake B-1 and the clutch C-3. The basic operation is the same as that of the automatic transmission 11 shown in Fig. 1 except that the one-way clutches F-1, F-2 and F3 function as brakes B-1, B-2 and B-4, respectively.

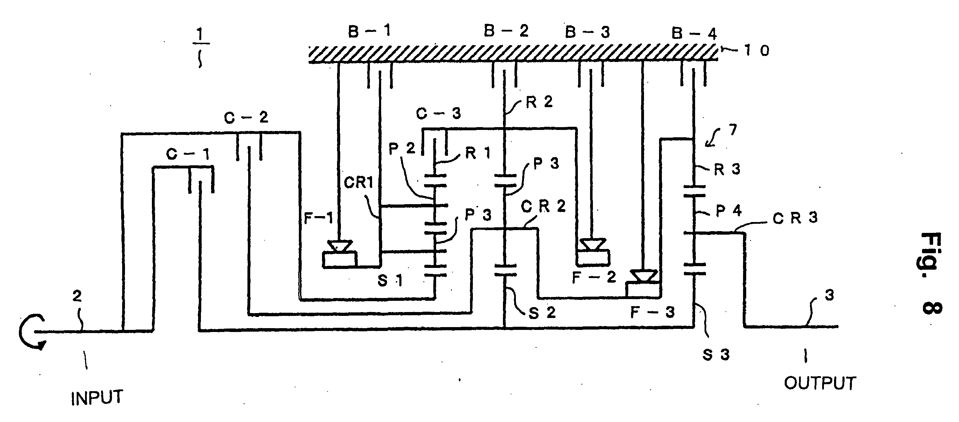

The torque load of the clutch C-3 positioned as shown in the drawing is increased as compared with the case shown in Fig. 1. As shown in Fig. 8, however, the clutch C-3 may be disposed between the ring gear R1 of the front planetary gear unit 5 and the ring gear R2 of the middle planetary gear unit 6. In this case also, it is possible to maintain the relative rotation between the shift elements of the front planetary gear unit 5 within an appropriate range. Since only the clutch C-3 is disposed between the front planetary gear unit 5 and the planetary gear set 9, it is unnecessary to dispose the one-way clutch for coast and a clutch for operating the one-way clutch in parallel, and the automatic transmission can be accommodated in the compact space.

A structure of the front planetary gear unit 5 is not limited so long as rotation of the input shaft 2 can be reduced and transmitted to the planetary gear set 9. In addition to the structures shown in Figs. 1(b) and 2(b), it is possible to employ a structure in which the sun gear S1 is connected to the case through the brake B-1 and the one-way clutch F-1, and a structure in which rotation of the input shaft 2 is input to the sun gear S1 through the clutch C-3, the ring gear R1 is connected to the case through the brake B-1 and the one-way clutch F-1, and the carrier CR1 of the single pinion P1 is connected to the shift element of the rear planetary gear set 9 as shown in Fig. 9(b).

Further, as shown in Fig. 9(c), it is also possible to employ the structure in which rotation of the input shaft 2 is input to the ring gear R1 through the clutch C-3, the sun gear S1 is connected to the case through the brake B-1 and the one-way clutch F-1, and the carrier CR1 of the single pinion P1 is connected to the shift element of the rear planetary gear set 9.

## Claims

1. An automatic transmission (1) for a vehicle comprising:
an input shaft (2) and an output shaft (3);
a planetary gear unit (5) comprising first (S1), second (CR1) and third (R1) shift elements of the automatic transmission; and
a planetary gear set (9) having at least a fourth (R2), a fifth (R3, CR2), a sixth (CR3), and a seventh (S2) shift element of the automatic transmission,
each of the first to seventh shift elements including one or two of the following three elements: a sun gear, a carrier, a ring gear,
wherein the planetary gear unit (5) and the planetary gear set (9) cooperate to achieve multistage shifting, and wherein
rotation of the input shaft (2) is input to the first shift element (S1) through a first clutch (C-3);
the second shift element (CR1) is engaged and stopped from rotating by a first engaging member (B-1, F-1);
the third shift element (R1) for outputting, without a clutch between the third (R1) and the fourth (R2) shift element, to the fourth shift element (R2) of the planetary gear set (9), rotation at a speed that is reduced relative to the rotational speed of the input shaft; wherein the fourth shift element (R2; S2) is provided so as to be stopped from rotating by a second engaging member (B-2) and wherein
the planetary gear set (9) further comprises a fifth shift element (R3, CR2) detachably connected to the input shaft (2) by a second clutch, (C-2) and provided so as to be stopped from rotating by a third engaging member (F-3, B-4), a sixth shift element (CR3) connected to the output shaft (3), and a seventh shift element (S3, S2) which is detachably connected to the input shaft by a third clutch (C-1).

2. The automatic transmission for a vehicle according to claim 1, wherein:
the first engaging member (S1) comprises a first brake (B-1) and a first one-way clutch (F-1) for permitting rotation only in one direction, and
the second shift element (CR1) is connected to a case (10) and stopped from rotating when the first brake (B-1) or the first one-way clutch (F-1) is engaged.

3. The automatic transmission for a vehicle according to claim 2 wherein:
the first shift element (S1) is connected to a case (10) through a second one-way clutch (F-2) and a second brake (B-2); and
the second one-way clutch (F-2) is locked by engaging the second brake (B-2) so as to stop the rotation of the fourth shift element (R2).

4. The automatic transmission for a vehicle according to claim 2, wherein:
the first shift etement (S1) is connected to the case (10) through a third brake (B-3), and
the fourth shift element (R2) is stopped from rotating by engaging the first brake (B-1) and the third brake (B-3).

## Patentansprüche

1. Automatikgetriebe (1) für ein Fahrzeug mit:
einer Eingangswelle (2) und einer Ausgangswelle (3);
einer Planetenradeinheit (5) mit einem ersten (S1), einem zweiten (CR1) und einem dritten (R1) Schaltelement des Automatikgetriebes; und
einem Planetenradsatz (9) mit mindestens einem vierten (R2), einem fünften (R3, CR2), einem sechsten (CR3) und einem siebenten (S2) Schaltelement des Automatikgetriebes,
wobei das erste bis siebente Schaltelement jeweils ein oder zwei der folgenden drei Elemente aufweisen: ein Sonnenrad, einen Träger, ein Ringrad,
wobei die Planetenradeinheit (5) und der Planetenradsatz (9) zusammenwirken, um mehrstufiges Schalten zu erreichen, und wobei
Drehung der Eingangswelle (2) zum ersten Schaltelement (S1) über eine erste Kupplung (C-3) eingegeben wird;
das zweite Schaltelement (CR1) durch ein erstes Eingriffsteil (B-1, F-1) ergriffen und an Drehung gehindert wird;
das dritte Schaltelement (R1) dazu dient, ohne eine Kupplung zwischen dem dritten (R1) und dem vierten (R2) Schaltelement zum vierten Schaltelement (R2) des Planetenradsatzes (9) Drehung mit einer Drehzahl auszugeben, die relativ zur Drehzahl der Eingangswelle reduziert ist; wobei das vierte Schaltelement (R2; S2) so vorgesehen ist, daß es durch ein zweites Eingriffsteil (B-2) an Drehung gehindert wird, und wobei
der Planetenradsatz (9) ferner aufweist: ein fünftes Schaltelement (R3, CR2), das durch eine zweite Kupplung (C-2) mit der Eingangswelle (2) lösbar verbunden und so vorgesehen ist, daß es durch ein drittes Eingriffsteil (F-3, B-4) an Drehung gehindert wird, ein sechstes Schaltelement (CR3), das mit der Ausgangswelle (3) verbunden ist, und ein siebentes Schaltelement (S3, S2), das durch eine dritte Kupplung (C-1) mit der Eingangswelle lösbar verbunden ist.

2. Automatikgetriebe für ein Fahrzeug nach Anspruch 1, wobei:
das erste Eingriffsteil (S1) eine erste Bremse (B-1) und eine erste Freilaufkupplung (F-1) zum Ermöglichen von Drehung nur in einer Richtung aufweist, und
das zweite Schaltelement (CR1) mit einem Gehäuse (10) verbunden ist und an Drehung gehindert wird, wenn die erste Bremse (B-1) oder die erste Freilaufkupplung (F-1) betätigt/eingerückt ist.

3. Automatikgetriebe für ein Fahrzeug nach Anspruch 2, wobei:
das erste Schaltelement (S1) mit einem Gehäuse (10) über eine zweite Freilaufkupplung (F-2) und eine zweite Bremse (B-2) verbunden ist; und
die zweite Freilaufkupplung (F-2) durch Betätigen der zweiten Bremse (B-2) gesperrt wird, um die Drehung des vierten Schaltelements (R2) zu stoppen.

4. Automatikgetriebe für ein Fahrzeug nach Anspruch 2, wobei:
das erste Schaltelement (S1) mit dem Gehäuse (10) über eine dritte Bremse (B-3) verbunden ist, und
das vierte Schaltelement (R2) durch Betätigen der ersten Bremse (B-1) und der dritten Bremse (B-3) an Drehung gehindert wird.

## Revendications

1. Transmission automatique (1) pour un véhicule comprenant :
un arbre d'entrée (2) et un arbre de sortie (3) ;
une unité d'engrenages planétaires (5) comprenant des premier (S1), deuxième (CR1) et troisième (R1) éléments de commutation de la transmission automatique ; et
un jeu d'engrenages planétaires (9) ayant au moins un quatrième (R2), un cinquième (R3, CR2) un sixième (CR3) et un septième (S2) élément de commutation de la transmission automatique ;
chacun des premier à septième éléments de commutation comprenant un ou deux des trois éléments suivants : un planétaire, un support, une couronne,
dans laquelle l'unité d'engrenages planétaires (5) et le jeu d'engrenages planétaires (9) coopèrent pour obtenir une commutation multi-étage, et dans laquelle
la rotation de l'arbre d'entrée (2) est l'entrée au premier élément de commutation (S1) par l'intermédiaire d'un premier embrayage (C-3) ;
le deuxième élément de commutation (CR1) est engagé avec un premier élément d'engagement (B-1, F-1) et sa rotation est interrompue par celui-ci ;
le troisième élément de commutation (R1) pour sortir, sans embrayage entre le troisième (R1) et le quatrième (R2) élément de commutation, au quatrième élément de commutation (R2) du jeu d'engrenages planétaires (9), une rotation à une vitesse réduite par rapport à la vitesse de rotation de l'arbre d'entrée ; dans laquelle le quatrième élément de commutation (R2 ; S2) est prévu de façon à ce que sa rotation soit interrompue par un deuxième élément d'engagement (B-2) et dans laquelle
le jeu d'engrenages planétaires (9) comprend en outre un cinquième élément de commutation (R3, CR2) raccordé de manière amovible à l'arbre d'entrée (2) par un deuxième embrayage (C-2) et disposé de sorte que sa rotation soit interrompue par un troisième élément d'engagement (F3, B4), un sixième élément de commutation (CR3) étant raccordé à l'arbre de sortie (3) et un septième élément de commutation (S3, S2) qui est raccordé de manière amovible à l'arbre d'entrée par un troisième embrayage (C-1).

2. Transmission automatique pour un véhicule selon la revendication 1, dans laquelle :
le premier élément d'engagement (S1) comprend un premier frein (B-1) et une première roue libre (F-1) afin de ne permettre la rotation que dans un seul sens, et
le deuxième élément de commutation (CR1) est raccordé à un carter (10) et sa rotation est interrompue lorsque le premier frein (B-1) ou la première roue libre (F-1) est engagé.

3. Transmission automatique pour un véhicule selon la revendication 2, dans laquelle :
le premier élément de commutation (S1) est raccordé à un carter (10) par l'intermédiaire d'une deuxième roue libre (F-2) et d'un deuxième frein (B-2) ; et
la deuxième roue libre (F-2) est bloquée par engagement du deuxième frein (B-2) de façon à interrompre la rotation du quatrième élément de commutation (R2).

4. Transmission automatique pour un véhicule selon la revendication 2, dans laquelle :
le premier élément de commutation (S1) est raccordé au carter (10) par l'intermédiaire d'un troisième frein (B-3), et
la rotation du quatrième élément de commutation (R2) est interrompue par l'engagement du premier frein (B-1) et du troisième frein (B-3).
